# EUROPEAN PATENT SPECIFICATION

(11) **EP 2 701 442 B1**
(45) Date of publication and mention of the grant of the patent: **06.07.2016**
(21) Application number: 11762043.5
(22) Date of filing: 09.05.2011
(51) Int. Cl.: H04W 72/00, H04W 72/04, H04W 72/12, H04L 29/06

(54) **SERVICE SCHEDULING METHOD AND BASE STATION**
DIENSTPLANUNGSVERFAHREN UND BASISSTATION
PROCÉDÉ D'ORDONNANCEMENT DE SERVICES, ET STATION DE BASE

(43) Date of publication of application: 26.02.2014
(73) Proprietor: Huawei Technologies Co., Ltd., Longgang District Shenzhen, Guangdong 518129 (CN)
(72) Inventor: ZHANG, Hao, Shenzhen Guangdong 518129 (CN)
(74) Representative: Epping - Hermann - Fischer
(86) International application number: PCT/CN2011/073824
(87) International publication number: WO 2011/120469

(56) References cited:
- EP-A2- 2 263 411
- WO-A2-2009/116939
- WO-A2-2010/131884
- CN-A- 1 889 778
- CN-A- 101 291 279
- CN-A- 101 647 214
- CN-A- 101 778 473
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.3.0, 5 April 2011 (2011-04-05), pages 1-197, XP050477175, [retrieved on 2011-04-05]

## Description

### TECHNICAL FIELD

The present invention relates to a system in the field of wireless communications technologies, and in particular, to a service scheduling method and a base station.

### BACKGROUND

With the development of technologies, such as an IP multimedia subsystem, a trend is gradually formed to provide a voice service over an IP network. Therefore, an evolution target of the LTE (Long Term Evolution, long term evolution) is an all-IP communications network that supports abundant services, such as multimedia, voice over IP (VoIP, Voice over IP), and data download.

A VoIP service is a low-speed service and data of the VoIP service is sent in a fixed period. For example, a voice data packet is sent every 20 ms within a voice communication period of the VoIP service. For the VoIP service, an LTE system controls transmission of the VoIP service in a semi-persistent scheduling (SPS, semi-persistent scheduling) manner.

In the LTE system, semi-persistent scheduling means that a base station allocates a fixed time-frequency resource for a data packet of a specific service and the data packet of the specific service is periodically transmitted at a position of the fixed time-frequency resource, that is, transmitted on a pre-allocated resource without the need of extra scheduling information of a physical downlink control channel (PDCCH, Physical Downlink Control Channel). Through a configured semi-persistent transmission period, after scheduling of one time, a user equipment (UE, User Equipment) performs data sending and receiving according to a configured period and a configured initial scheduling resource. In the prior art, a UE may have multiple services simultaneously. For example, the UE may perform a data service simultaneously when performing a VoIP service. When the UE not only performs the VoIP service but also performs another data service, a base station needs to allocate and schedule a resource for the UE properly, so that it not only ensures a quality of service (Quality of Service, QoS) requirement of the VoIP service but also needs to provide a resource for the UE as many as possible to improve a throughput of a service other than the VoIP service. However, the prior art still cannot meet a QoS requirement of service scheduling in a VoIP mixed service state.

Document WO 2009/116939 (international application published under the patent cooperation treaty) discloses a method relating to uplink communications from a wireless terminal to a network over a radio interface. The method includes determining a priority associated with the detected data; transmitting an uplink transmission scheduling request to the network if the determined priority is a first priority; and delaying transmission or not transmitting an uplink transmission scheduling request to the network if the determined priority is a second different priority, wherein the second priority data corresponds to a data flow configured not to send a scheduling request.

Document WO 2010/131884 (international application published under the patent cooperation treaty) discloses a method for reporting buffer status of a user equipment in a mobile communication system. The method includes being allocated a transmission resource from a node B; determining information to add to a certain region of a first Medium Access Control (MAC) subheader through an N-th MAC subheader using the transmission resource; generating a MAC Protocol Data Unit (PDU) by concatenating the first MAC subheader through the N-th MAC subheader with corresponding payload elements; and transmitting the generated MAC PDU.

"3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10)", 3GPP STANDARD; 3GPP TS 36.300, 3RD GENERATION PARTNERSHIP PROJECT (3GPP), MOBILE COMPETENCE CENTRE; 650, ROUTE DES LUCIOLES; F-06921 SOPHIA_ANTIPOLIS CEDEX; FRANCE, no V10.3.0, 5 April 2011 ("011-04-05), pages 1-197, XP050477175, [retrieved on 2011-04-05] describes scheduling and rate control, discontinuous transmission and quality of service of an E-UTRAN architecture.

### SUMMARY

Embodiments of the present invention provide a service scheduling method and a base station so as to ensure a QoS requirement of service scheduling in a VoIP mixed service state.

In one aspect, an embodiment of the present invention provides a service scheduling method. The method includes: a base station acquires a buffer state report periodically reported by a user equipment, determines whether the UE is in a voice over IP mixed service state according to the BSR, wherein the VoIP mixed service state is a state of the UE in which the UE simultaneously performs a VoIP service and a data service; and schedules a VoIP service in a dynamic scheduling manner when the UE is in the VoIP mixed service state.

In another aspect, an embodiment of the present invention provides a base station. The base station includes: an acquiring unit, configured to acquire a buffer state report periodically reported by a user equipment; a detecting unit, configured to detect whether a user equipment UE is in a VoIP mixed service state according to the BSR, wherein the VoIP mixed service state is a state of the UE in which the UE simultaneously performs a VoIP service and a data service; and a scheduling unit, configured to preferentially schedule a VoIP service in a dynamic scheduling manner when the UE is in the VoIP mixed service state.

In another aspect, an embodiments of the present invention provides a service scheduling method, the method includes: a user equipment reports a buffer state report periodically to a base station, and performs a voice over IP service scheduled by the base station in a dynamic scheduling manner when the base station determining that the UE is in a VoIP mixed service state according to the BSR.

In another aspect, an embodiment of the present invention provides a user equipment, the user equipment includes: a means for reporting a buffer state report periodically to a base station; and a means for performing a voice over IP service scheduled by the base station in a dynamic scheduling manner when the base station determining that the UE is in a VoIP mixed service state according to the BSR.

The foregoing technical solutions have the following beneficial effect: A technical means of determining whether a user equipment UE is in a VoIP mixed service state and preferentially scheduling a VoIP service in a dynamic scheduling manner when the UE is in the VoIP mixed service state is used, and therefore, a technical effect of ensuring a QoS requirement of service scheduling in the VoIP mixed service state is achieved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flow chart of a service scheduling method according to an embodiment of the present invention;
FIG. 2 is a schematic structural diagram of a base station according to an embodiment of the present invention; and
FIG. 3 is a schematic structural diagram of another base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

In the embodiments of the present invention, a UE may simultaneously perform a VoIP service and a data service, that is, the UE may simultaneously have a bearer of the VoIP service and one or more bearers of the data service. In the embodiments of the present invention, the UE simultaneous performs a VoIP service and a data service, which may be called a VoIP mixed service state. Therefore, if the UE simultaneously has a bearer of the VoIP service and a bearer of the data service, it may be considered that the UE is in a VoIP mixed service state. If the UE performs only the VoIP service without a service of another type, it may be considered that the UE is in a VoIP non-mixed service state, that is, the UE has only the bearer of the VoIP service in this case.

In the embodiments of the present invention, the UE may be UEs that may be distributed in an entire wireless network, and each UE may be static or mobile. The UE may be called a terminal (terminal), a mobile station (mobile station, MS), a subscriber unit (subscriber unit), a station (station), or the like. The UE may be a cellular phone (cellular phone), a personal digital assistant (personal digital assistant, PDA), a wireless modem (modem), a wireless communications device, a handheld device (handheld), a laptop computer (laptop computer), a cordless phone (cordless phone), a wireless local loop (wireless local loop, WLL) station, or the like. The UE may communicate with a macro base station, a pico base station, a femto base station, a relay node (relay node, RN), or the like.

In the embodiments of the present invention, a base station may be an evolved NodeB (evolved Node B, eNB), a Node B, an access point (access point), or the like. Each base station may provide communication coverage for a specific geographic area. A term "cell (cell)" may be a coverage area of a base station and/or a coverage area served by a base station subsystem, which depends on a context in which the term is used. The base station may provide communication coverage for a macro cell, a pico cell (pico cell), a femto cell (femto cell), and/or a cell of another type.

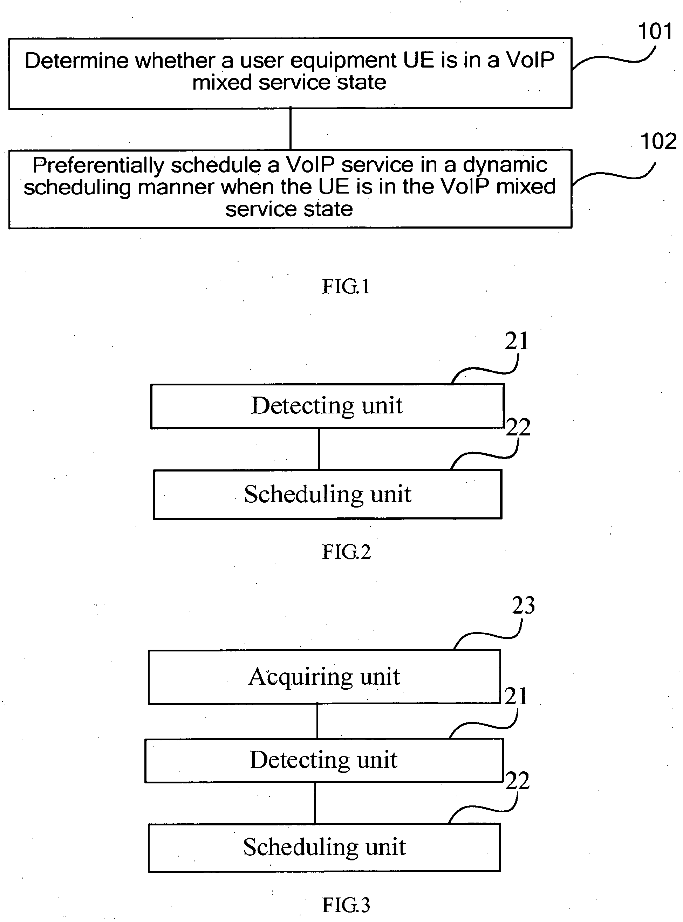

FIG. 1 is a flow chart of a service scheduling method according to an embodiment of the present invention. The method includes:
101. A base station determines whether a user equipment UE is in a VoIP mixed service state.

Optionally, the determining whether a user equipment UE is in a VoIP mixed service state may include: acquiring a buffer status report (buffer status reporting, BSR) reported by the UE in a period and determining, according to the BSR, whether the UE is in the VoIP mixed service state. Optionally, the period is a period for the UE to report a BSR of a VoIP service.

Optionally, in this embodiment, the determining whether a user equipment UE is in a VoIP mixed service state may further include: acquiring QoS class identifier (QoS Class Identifier, QCI) levels borne by all DRB (Data Radio Bearer, data radio bearer) of the UE; if both a logical channel of a QCI level 1 and a logical channel of a non-QCI level 1 exist, determining that the UE is in the VoIP mixed service state; and if only a logical channel of a QCI level 1 exists, determining that the UE is in a VoIP non-mixed service state.

102. Schedule a VoIP service in a dynamic scheduling manner when the UE is in the VoIP mixed service state.

Optionally, the VoIP service is scheduled in a semi-persistent scheduling manner when the UE is in the VoIP non-mixed service state.

In this embodiment of the present invention, a packaging and sending process of uplink data may be completed by the UE, and the base station allocates an uplink resource for the UE and delivers an uplink grant (UL grant). The UE may perform transmission on each logical channel according to a configured prioritized bit rate (Prioritized Bit Rate, PBR) and priority. For the VoIP service, the logical channel of the QCI level 1 may be used for transmission. Therefore, it may be configured that a priority of the logical channel of the QCI level 1 is higher than that of a logical channel of another level. That is, when the UE has the uplink grant and simultaneously has service data of the QCI level 1 and service data of another QCI level, the UE is enabled to preferentially send the data of the QCI level 1. QCI levels may include QCI level 1 to level 9. Each QCI level may correspond to one standardized feature. For details, reference may be made to descriptions related to a standardized QoS feature and standardized QCI feature in the 3GPP TS 23.203.

The BSR reported by the UE may be used to distinguish different logical channel groups. For example, uplink logical channels may be classified into four groups according to specifications of the 3GPP TS36.331 protocol, and a number of a group to which each logical channel belongs is decided through configuration when the base station establishes a bearer. The UE can report BSRs of data volume information of a maximum of four logical channel groups at a time.

According to a mechanism for the UE to report a BSR, if the logical channel of the QCI level 1 is configured to an independent logical channel group, the base station may determine, according to the BSR, whether the UE has reported both data volume information of the independent logical channel group and data volume information of another logical channel group within one period, so as to determine whether the UE is in the VoIP mixed service state.

In this embodiment of the present invention, the base station may determine, according to logical channel group information included in the BSR reported by the UE, whether the UE is in the VoIP mixed service state, which may specifically be: according to the BSR reported by the UE, when it is detected that a BSR reported based on a logical channel group to which the logical channel of the QCI level 1 belongs exists on the UE and it is also detected that a BSR reported based on a logical channel group to which a logical channel of a non-QCI level 1 belongs exists, determining that the UE is in the VoIP mixed service state.

Optionally, when it is detected that a BSR reported based on a logical channel group to which the logical channel of the QCI level 1 belongs exists on the UE but it is detected that a BSR reported based on a logical channel group to which a logical channel of a non-QCI level 1 belongs does not exist, it is determined that the UE is in the VoIP non-mixed service state.

For example, for distinguishing data volume information of the logical channel of the QCI level 1 from that of another QCI level, a logical channel group number to which the logical channel of the QCI level 1 belongs and a logical channel group number to which the logical channel of another QCI level belongs may be configured in a distinguishing manner. For example, the logical channels are classified into three groups, as shown in Table 1:

| Logical Channel Type | Logical Channel Group Number |
|---|---|
| IMS (IP Multimedia Subsystem, IP multimedia subsystem) and control signaling | 0 |
| Logical channel of a QCI level 1 | 1 |
| Logical channels of QCI levels 2-9 | 2 |

### Table 1 Logical channel group list

It is assumed that the base station allocates, according to the configuration described in Table 1, a group of each logical channel of the UE, and the UE has a default bearer of a nonGBR (non-Guaranteed Bit Rate, non-guaranteed bit rate) and a dedicated bearer of the QCI level 1. A UDP (User Datagram Protocol, user datagram protocol) transmission service is performed on the default bearer, and the VoIP service is performed on the dedicated bearer.

For example, after the UE completes normal access, VoIP voice communication is first performed and a file transfer protocol (file transfer protocol, FTP) upload service is performed simultaneously. The base station may determine, according to a received data packet that is of the UE and belongs to a bearer of the QCI level 1 and data packet arrival periodicity, that the UE is in a VoIP communication state; moreover, the base station may determine, according to a received BSR (used to request a time-frequency resource that is required for FTP uploading) that is of a logical channel group 2 and reported by the UE, that the UE further has service data of a non-VoIP service. In this case, the base station may determine that the UE is in the VoIP mixed service state.

A manner of determining, according to the BSR, whether the UE is in the VoIP mixed service state is used to create a condition for optimal scheduling of the base station: When the UE performs an uplink service on the bearer of the QCI level 1 and a bearer of a non-QCI level 1 simultaneously and mixed services exist, it can be determined whether the UE is in the VoIP mixed service state; in addition, when multiple bearers simultaneously exist on the UE but no uplink service is performed on the bearer of the non-QCI level 1, it is not incorrectly determined that the UE is in the VoIP mixed service state.

In this embodiment of the present invention, after it is determined whether the UE is in the VoIP mixed service state, the base station may distinguish a service scheduling policy of the UE in the VoIP mixed service state from that of the UE in the VoIP non-mixed service state, so that service scheduling may be optimal.

When the UE is in the VoIP non-mixed service state, the base station may use semi-persistent scheduling to reduce PDCCH consumption as much as possible and meet QoS satisfaction of the VoIP.

When the UE is in the VoIP non-mixed service state, that is, the UE performs only the VoIP service, the VoIP service is transmitted in a semi-persistent scheduling manner and a period of uplink transmission may be configured to 20 ms. It is assumed that initial service scheduling is on a resource whose resource number is n. The UE performs sending on the same resource n every 20 ms, where n may be an integer. After the semi-persistent scheduling is used, because a grant does not need to be delivered after activation, VoIP capacity of a system may be significantly improved for the UE that performs the VoIP service.

When the semi-persistent scheduling starts, firstly the base station needs to perform initial configuration on the UE through RRC (Radio Resource Control, radio resource control) signaling, An activation and release process of the semi-persistent scheduling may be controlled by the base station through DCI (Downlink control information, downlink control information) delivered on a PDCCH channel. The semi-persistent scheduling is a manner of one configuration and multiple times of transmission based on the configuration, and therefore has a high requirement for accuracy of configuration information transmission, so as to avoid a case of severe interference with another user caused by each transmission after incorrect receiving of configuration information. Therefore, some bits of a PDCCH in activated/released semi-persistent scheduling may be used as CRC (Cyclic redundancy check, cyclic redundancy check) check bits to reduce a possibility of fake decoding of the PDCCH. For an uplink semi-persistent manner, an implicit release mechanism may further be used to solve a case of semi-persistent fake activation. Implicit release means that, when the UE detects that N empty packets (that is, pure Padding packets) are consecutively sent on an uplink activation semi-persistent scheduling resource, the UE itself releases an uplink semi-persistent resource and the UE does not automatically continue sending uplink data on a fixed time-frequency resource in subsequent processing, where N may be an integer.

The base station configures and enables, through RRC, semi-persistent scheduling and delivers a PDCCH to activate an uplink semi-persistent resource of the UE. Sequentially the UE sends a voice packet of an uplink VoIP service every 20 ms according to a fixed time-frequency resource, and the UE and the base station may cooperate well to complete semi-persistent transmission of a single VoIP service.

When the UE is in the VoIP mixed service state, to avoid that abnormal implicit release occurs to the UE and meet QoS satisfaction of the VoIP as much as possible, the base station preferentially schedules a VoIP service in a dynamic scheduling manner, that is, dynamically indicates an uplink time-frequency resource available for the UE. For example, the uplink time-frequency resource available for the UE may be dynamically indicated by delivering an uplink grant (UL grant). Further, for example, the UL grant may be sent on the PDCCH through scheduling of a level of 1 ms, and the uplink time-frequency resource available for the UE is indicated to the UE. For a service of a QCI level 1, the service of the QCI level 1 is scheduled by using a priority higher than priorities of GBR (Guaranteed Bit Rate, guaranteed bit rate) and nonGBR services. For data of another service in mixed services, priorities of the another service may be determined according to its own QoS requirement, and dynamic scheduling is also used through the UL grant delivered on the PDCCH.

With the technical solution of the foregoing method in this embodiment of the present invention, by depending on accurate determining whether a UE is in a VoIP mixed service state, a base station uses dynamic scheduling with a high priority in the VoIP mixed service state, and the base station uses normal semi-persistent scheduling in a VoIP non-mixed service state. The semi-persistent scheduling is used as much as possible so to save a PDCCH overhead; meanwhile, a QoS requirement of VoIP is met in the VoIP mixed-service state on the precondition that system reliability is ensured.

Corresponding to the technical solution of the foregoing method, an embodiment of the present invention provides a base station, where the base station may implement the service scheduling method provided in the foregoing embodiment of the present invention. FIG. 2 is a schematic structural diagram of a base station according to an embodiment of the present invention. The base station includes:
a detecting unit 21, configured to detect whether a user equipment UE is in a VoIP mixed service state; and
a scheduling unit 22, configured to preferentially schedule a VoIP service in a dynamic scheduling manner when the UE is in the VoIP mixed service state.

FIG. 3 is a schematic structural diagram of another base station according to an embodiment of the present invention. The base station may also implement the service scheduling method provided in the foregoing embodiment of the present invention. The base station not only includes the detecting unit 21 and the scheduling unit 22 described in the foregoing but also may include an acquiring unit 23, configured to acquire a buffer status report BSR periodically reported by the UE, where the detecting unit 21 is further configured to determine, according to the BSR, whether the UE is in the VoIP mixed service state. Optionally, the period is a period for the UE to report a BSR of a VoIP service. The period may be greater than 20 ms.

Optionally, the detecting unit 21 may further be configured to, according to the BSR reported by the UE, when it is detected that a BSR reported based on a logical channel group to which a logical channel of a QCI level 1 belongs exists on the UE and it is also detected that a BSR reported based on a logical channel group to which a logical channel of a non-QCI level 1 belongs exists, determine that the UE is in the VoIP mixed service state.

Optionally, the detecting unit 21 may further be configured to, when it is detected that a BSR reported based on a logical channel group to which a logical channel of a QCI level 1 belongs exists on the UE but it is detected that a BSR reported based on a logical channel group to which a logical channel of a non-QCI level 1 belongs does not exist, determine that the UE is in a VoIP non-mixed service state.

Optionally, the scheduling unit 22 may further be configured to schedule the VoIP service in a semi-persistent scheduling manner when the UE is in the VoIP non-mixed service state.

In this embodiment, for a process that the scheduling unit 22 performs scheduling in a dynamic scheduling manner or in a semi-persistent scheduling manner, reference may be made to the dynamic scheduling manner or the semi-persistent scheduling manner provided in the foregoing method embodiment.

With the technical solution of the foregoing apparatus in this embodiment of the present invention, by depending on accurate determining whether a UE is in a VoIP mixed service state, a base station uses dynamic scheduling with a high priority in the VoIP mixed service state, and the base station uses normal semi-persistent scheduling in a VoIP non-mixed service state. The semi-persistent scheduling is used as much as possible so to save a PDCCH overhead; meanwhile, a QoS requirement of VoIP is met in the VoIP mixed-service state on the precondition that system reliability is ensured.

Persons skilled in the art may further understand that various illustrative logical blocks (illustrative logic block), units, and steps listed in the embodiments of the present invention may be implemented by using electronic hardware, computer software, or a combination of the two. To clearly describe interchangeability of hardware and software, functions of the foregoing illustrative components (illustrative components), units, and steps have been generally described. Whether such functions are implemented by using hardware or software depends on a particular application and a design requirement of the entire system. Persons skilled in the art may use various methods to implement the functions for each particular application, but it should not be considered that such implementation goes beyond the protection scope of the embodiments of the present invention.

The various illustrative logical blocks or units described in the embodiments of the present invention may implement or operate the described functions through a design of a general processor, a digital signal processor, an application-specific integrated circuit (ASIC), a field programmable gate array (FPGA) or another programmable logical apparatus, a discrete gate or transistor logic, a discrete hardware component, or any combination of the foregoing. The general processor may be a micro processor. Optionally, the general processor may also be any traditional processor, controller, micro controller, or state machine. The processor may also be implemented by using a computing apparatus combination, such as a digital signal processor and a micro processor, multiple micro processors, one or more micro processors with a digital signal processor core, or any other similar configuration.

Steps of the method or algorithm described in the embodiments of the present invention may be directly embedded into hardware, a software module executed by a processor, or a combination of the two. The software module may be stored in a RAM memory, a flash memory, a ROM memory, an EPROM memory, an EEPROM memory, a register, a hard disk, a movable disk, a CD-ROM, or a storage medium of any other form in the art. Exemplarily, the storage medium may connect to the processor so that the processor may read information from the storage medium and write information into the storage medium. Optionally, the storage medium may also be integrated into the processor. The processor and the storage medium may be disposed in the ASIC and the ASIC may be disposed in a user terminal. Optionally, the processor and the storage medium may also be disposed in different components of the user terminal.

In one or more exemplary designs, the foregoing functions described in the embodiments of the present invention may be implemented by using hardware, software, firmware, or any combination of the three. If the foregoing functions are implemented by the software, these functions may be stored on a computer-readable medium or are transmitted to a computer-readable medium in the form of one or more instructions or codes. The computer-readable medium includes a computer storage medium and a communication medium that enables a computer program to move from one place to another place. The storage medium may be an available medium that may be accessed by any general or special computer. For example, such computer-readable medium may include but is not limited to a RAM, a ROM, an EEPROM, a CD-ROM or another optical disk storage, a magnetic disk storage or another magnetic storage apparatus, or any other medium that may be used to bear or store a program code, where the program code is in the form of an instruction or data structure or the form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, and such software is also included in the defined computer-readable medium. The disk (disk) and disc (disc) include a compressed magnetic disc, a laser disk, an optical disk, a DVD, a floppy disk, and a blue-ray disk. The disc generally copies data through magnetic and the disk generally copies data optically through laser. The foregoing combination may also be included in the computer-readable medium.

According to the foregoing description of this specification in the present invention, technologies in the art may use or implement content of the present invention. Any modification based on the disclosed content shall be considered to be obvious in the art. The basic principle described in the present invention may apply to other variations but does not depart from the invention essence and scope of the present invention. Therefore, the content disclosed in the present invention is not limited to the described embodiments and designs but may also be extended to a maximum scope that is consistent with the principles and disclosed new features of the present invention.

## Claims

1. A service scheduling method, comprising:
acquiring (101), by a base station, a buffer state report, BSR, periodically reported by a user equipment, UE, **characterized in that**, the method further comprises:
determining (101), by the base station, whether the UE is in a voice over IP, VoIP, mixed service state according to the BSR, wherein the VoIP mixed service state is a state of the UE in which the UE simultaneously performs a VoIP service and a data service; and
scheduling (102), by the base station, the VoIP service in a dynamic scheduling manner when the UE is in the VoIP mixed service state.

2. The method according to claim 1, wherein the determining whether the UE is in the VoIP mixed service state according to the BSR, comprises:
if it is detected that a BSR reported based on a logical channel group to which a logical channel of a quality of service class identifier, QCI, level 1 belongs exists and a BSR reported based on a logical channel group to which a logical channel of a non-QCI level 1 belongs exists, determining, according to the BSR reported by the UE, that the UE is in the VoIP mixed service state.

3. The method according to claim 1, wherein the determining whether the UE is in the VoIP mixed service state according to the BSR, comprises:
if it is detected that a BSR reported based on a logical channel group to which a logical channel of a quality of service class identifier QCI level 1 belongs exists but a BSR reported based on a logical channel group to which a logical channel of a non-QCI level 1 belongs does not exist, determining, according to the BSR reported by the UE, that the UE is in a VoIP non-mixed service state.

4. The method according to any one of claims 1 to 3, wherein:
the VoIP service is scheduled in a semi-persistent scheduling manner when the UE is in the VoIP non-mixed service state.

5. A base station, comprising:
an acquiring unit (23), configured to acquire a buffer state report, BSR, periodically reported by a user equipment, UE, **characterized in that**, the base station further comprises:
a detecting unit (21), configured to detect whether the UE is in a VoIP mixed service state according to the BSR, wherein the VoIP mixed service state is a state of the UE in which the UE simultaneously performs a VoIP service and a data service; and
a scheduling unit (22), configured to preferentially schedule the VoIP service in a dynamic scheduling manner when the UE is in the VoIP mixed service state.

6. The base station according to claim 5, wherein the detecting unit (21) is further configured to, if it is detected that a BSR reported based on a logical channel group to which a logical channel of a quality of service class identifier, QCI, level 1 belongs exists and a BSR reported based on a logical channel group to which a logical channel of a non-QCI level 1 exists, determine, according to the BSR reported by the UE, that the UE is in the VoIP mixed service state.

7. The base station according to claim 5, wherein the detecting unit (21) is further configured to, if it is detected that a BSR reported based on a logical channel group to which a logical channel of a quality of service class identifier, QCI, level 1 belongs exists but a BSR reported based on a logical channel group to which a logical channel of a non-QCI level 1 does not exist, determine, according to the BSR reported by the UE, that the UE is in a VoIP non-mixed service state.

8. The base station according to any one of claims 5 to 7, wherein:
the scheduling unit (22) is further configured to schedule the VoIP service in a semi-persistent scheduling manner when the UE is in the VoIP non-mixed service state.

## Patentansprüche

1. Dienstplanungsverfahren, das Folgendes aufweist:
Erfassen (101) eines Pufferzustandsberichts, BSR, der periodisch durch ein "User Equipment", UE, gemeldet wird, durch eine Basisstation, **dadurch gekennzeichnet,**
**dass** das Verfahren ferner Folgendes aufweist:
Bestimmen (101), ob das UE sich gemäß dem BSR in einem gemischten "Voice over IP"(VoIP)-Dienstzustand befindet, durch die Basisstation, wobei der gemischte VoIP-Dienstzustand ein Zustand des UE ist, in dem das UE gleichzeitig einen VoIP-Dienst und einen Datendienst durchführt; und
Planen (102) des VoIP-Dienstes auf eine dynamische Planungsweise durch die Basisstation, wenn das UE sich im gemischten VoIP-Dienstzustand befindet.

2. Verfahren nach Anspruch 1, wobei das Bestimmen, ob das UE sich gemäß dem BSR im gemischten VoIP-Dienstzustand befindet, Folgendes aufweist:
wenn ermittelt wird, dass ein BSR vorhanden ist, der basierend auf einer logischen Kanalgruppe gemeldet wurde, zu der ein logischer Kanal einer Dienstgüteklassenkennung, QCI, Stufe 1 gehört, und ein BSR vorhanden ist, der basierend auf einer logischen Kanalgruppe gemeldet wurde, zu der ein logischer Kanal einer Nicht-QCI-Stufe 1 gehört, Bestimmen gemäß dem durch das UE gemeldeten BSR, dass das UE sich im gemischten VoIP-Dienstzustand befindet.

3. Verfahren nach Anspruch 1, wobei das Bestimmen, ob das UE sich gemäß dem BSR im gemischten VoIP-Dienstzustand befindet, Folgendes aufweist:
wenn ermittelt wird, dass ein BSR vorhanden ist, der basierend auf einer logischen Kanalgruppe gemeldet wurde, zu der ein logischer Kanal einer Dienstgüteklassenkennung, QCI, Stufe 1 gehört, aber kein BSR vorhanden ist, der basierend auf einer logischen Kanalgruppe gemeldet wurde, zu der ein logischer Kanal einer Nicht-QCI-Stufe 1 gehört, Bestimmen gemäß dem durch das UE gemeldeten BSR, dass das UE sich in einem nicht gemischten VoIP-Dienstzustand befindet.

4. Verfahren nach einem der Ansprüche 1 bis 3, wobei:
der VoIP-Dienst auf eine semipersistente Planungsweise geplant wird, wenn das UE sich im nicht gemischten VoIP-Dienstzustand befindet.

5. Basisstation, die Folgendes aufweist:
eine Erfassungseinheit (23), die konfiguriert ist, um einen Pufferzustandsbericht, BSR, der periodisch durch ein "User Equipment", UE, gemeldet wird, zu erfassen,
**dadurch gekennzeichnet, dass** die Basisstation ferner Folgendes aufweist:
eine Ermittlungseinheit (21), die konfiguriert ist, um zu ermitteln, ob das UE sich gemäß dem BSR in einem gemischten VoIP-Dienstzustand befindet, wobei der gemischte VoIP-Dienstzustand ein Zustand des UE ist, in dem das UE gleichzeitig einen VoIP-Dienst und einen Datendienst durchführt; und
eine Planungseinheit (22), die konfiguriert ist, um vorzugsweise den VoIP-Dienst auf eine dynamische Planungsweise zu planen, wenn das UE sich im gemischten VoIP-Dienstzustand befindet.

6. Basisstation nach Anspruch 5, wobei die Ermittlungseinheit (21) ferner konfiguriert ist, um, wenn ermittelt wird, dass ein BSR vorhanden ist, der basierend auf einer logischen Kanalgruppe gemeldet wurde, zu der ein logischer Kanal einer Dienstgüteklassenkennung, QCI, Stufe 1 gehört, und ein BSR vorhanden ist, der basierend auf einer logischen Kanalgruppe gemeldet wurde, zu der ein logischer Kanal einer Nicht-QCI-Stufe 1 gehört, gemäß dem durch das UE gemeldeten BSR zu bestimmen, dass das UE sich im gemischten VoIP-Dienstzustand befindet.

7. Basisstation nach Anspruch 5, wobei die Ermittlungseinheit (21) ferner konfiguriert ist, um, wenn bestimmt wird, dass ein BSR vorhanden ist, der basierend auf einer logischen Kanalgruppe gemeldet wurde, zu der ein logischer Kanal einer Dienstgüteklassenkennung, QCI, Stufe 1 gehört, aber kein BSR vorhanden ist, der basierend auf einer logischen Kanalgruppe gemeldet wurde, zu der ein logischer Kanal einer Nicht-QCI-Stufe 1 gehört, gemäß dem durch das UE gemeldeten BSR zu bestimmen, dass das UE sich in einem nicht gemischten VoIP-Dienstzustand befindet.

8. Basisstation nach einem der Ansprüche 5 bis 7, wobei:
die Planungseinheit (22) ferner konfiguriert ist, um den VoIP-Dienst auf eine semipersistente Planungsweise zu planen, wenn das UE sich im nicht gemischten VoIP-Dienstzustand befindet.

## Revendications

1. Procédé d'ordonnancement de service, comprenant :
l'acquisition (101), par une station de base, d'un rapport d'état de tampon, BSR, communiqué périodiquement par un équipement utilisateur, UE, **caractérisé en ce que** le procédé comprend en outre :
la détermination (101), par la station de base, que l'équipement UE se trouve ou non dans un état de service mixte de voix sur IP, VoIP, en fonction du rapport BSR, l'état de service mixte VoIP étant un état de l'équipement UE dans lequel l'équipement UE exécute simultanément un service VoIP et un service de données ; et
l'ordonnancement (102), par la station de base, du service VoIP selon un ordonnancement dynamique quand l'équipement UE se trouve dans l'état de service mixte VoIP.

2. Procédé selon la revendication 1, dans lequel la détermination que l'équipement UE se trouve ou non dans l'état de service mixte VoIP en fonction du rapport BSR comprend :
s'il est détecté qu'un rapport BSR communiqué en fonction d'un groupe de canaux logiques auquel appartient un canal logique d'un identifiant de classe de qualité de service, QCI, de niveau 1 existe et qu'un rapport BSR communiqué en fonction d'un groupe de canaux logiques auquel appartient un canal logique sans identifiant QCI de niveau 1 existe, la détermination, en fonction du rapport BSR communiqué par l'équipement UE, que l'équipement UE se trouve dans l'état de service mixte VoIP.

3. Procédé selon la revendication 1, dans lequel la détermination que l'équipement UE se trouve ou non dans l'état de service mixte VoIP en fonction du rapport BSR comprend :
s'il est détecté qu'un rapport BSR communiqué en fonction d'un groupe de canaux logiques auquel appartient un canal logique d'un identifiant de classe de qualité de service, QCI, de niveau 1 existe mais qu'un rapport BSR communiqué en fonction d'un groupe de canaux logiques auquel appartient un canal logique sans identifiant QCI de niveau 1 n'existe pas, la détermination, en fonction du rapport BSR communiqué par l'équipement UE, que l'équipement UE se trouve dans un état de service non mixte VoIP.

4. Procédé selon l'une quelconque des revendications 1 à 3, dans lequel :
le service VoIP est ordonnancé selon un ordonnancement semi-permanent quand l'UE se trouve dans l'état de service non mixte VoIP.

5. Station de base, comprenant :
une unité d'acquisition (23), configurée pour acquérir un rapport d'état de tampon, BSR, communiqué périodiquement par un équipement utilisateur, UE, **caractérisée en ce que** la station de base comprend en outre :
une unité de détection (21), configurée pour détecter que l'équipement UE se trouve ou non dans un état de service mixte VoIP en fonction du rapport BSR, l'état de service mixte VoIP étant un état de l'équipement UE dans lequel l'équipement UE exécute simultanément un service VoIP et un service de données ; et
une unité d'ordonnancement (22), configurée pour ordonnancer préférentiellement le service VoIP selon un ordonnancement dynamique quand l'équipement UE se trouve dans l'état de service mixte VoIP.

6. Station de base selon la revendication 5, dans laquelle l'unité de détection (21) est configurée en outre pour, s'il est détecté qu'un rapport BSR communiqué en fonction d'un groupe de canaux logiques auquel appartient un canal logique d'un identifiant de classe de qualité de service, QCI, de niveau 1 existe et qu'un rapport BSR communiqué en fonction d'un groupe de canaux logiques auquel appartient un canal logique sans identifiant QCI de niveau 1 existe, déterminer, en fonction du rapport BSR communiqué par l'équipement UE, que l'équipement UE se trouve dans l'état de service mixte VoIP.

7. Station de base selon la revendication 5, dans laquelle l'unité de détection (21) est configurée en outre pour, s'il est détecté qu'un rapport BSR communiqué en fonction d'un groupe de canaux logiques auquel appartient un canal logique d'un identifiant de classe de qualité de service, QCI, de niveau 1 existe mais qu'un rapport BSR communiqué en fonction d'un groupe de canaux logiques auquel appartient un canal logique sans identifiant QCI de niveau 1 n'existe pas, déterminer, en fonction du rapport BSR communiqué par l'équipement UE, que l'équipement UE se trouve dans un état de service non mixte VoIP.

8. Station de base selon l'une quelconque des revendications 5 à 7, dans lequel :
l'unité d'ordonnancement (22) est configurée en outre pour ordonnancer le service VoIP selon un ordonnancement semi-permanent quand l'équipement UE se trouve dans l'état de service non mixte VoIP.
